# EUROPEAN PATENT SPECIFICATION

(11) **EP 1 357 146 B1**
(45) Date of publication and mention of the grant of the patent: **03.12.2008**
(21) Application number: 03076676.0
(22) Date of filing: 15.07.1999
(51) Int. Cl.: C08K 5/00, C09D 123/16, C08L 23/16

(54) **A process for the application of a seal or gasket to an article in situ**
Verfahren zur in-situ Auflegung einer Dichtung auf einen Artikel
Procédé de fabrication in-situ d'un joint sur un article

(43) Date of publication of application: 29.10.2003
(62) Divisional of application: 99935585.2
(73) Proprietor: DuPont Performance Elastomers L.L.C., Wilmington, DE 19809 (US)
(72) Inventor: Ruepping, Christian, 1246 Corsier (CH)
(74) Representative: Cockerton, Bruce Roger

(56) References cited:
- EP-A- 0 498 558
- US-A- 5 177 143
- US-A- 5 354 793
- PROF. DR. JÜRGEN FALBE UND PROF. DR. MANFRED REGITZ (HERAUSG.): "Römpp Chemie Lexikon, 9. Auflage" 1995, GEORG THIEME VERLAG STUTTGART - NEW YORK p. 4395: "Triallylcyanurat"

## Description

### FIELD OF THE INVENTION

This invention relates to a process for curing elastomeric seals rapidly, wherein the seals are formed by applying an uncured polymer composition directly onto a sealing element or a surface to be sealed.

### BACKGROUND OF THE INVENTION

Elastomeric compositions require a vulcanization, i.e. curing, step in order to develop the crosslinked network structure which confers optimum rubbery properties to such compositions. Typically, the curing processes are based on compression molding or transfer molding techniques wherein an elastomer, fully compounded with curing agent and other additives, is introduced into a mold that is then heated under pressure. The elevated temperatures used during the molding process cause chemical reaction of the elastomer and curative, thereby producing a crosslinked product.

The particular raw (i.e. uncured) elastomer used to manufacture a synthetic rubber article will be selected with reference to the specific end use application and environment under which the finished article must function. For example, one will select different elastomers from among ethylene alkyl acrylate copolymer rubbers, ethylene alpha-olefin copolymer elastomers, fluoroelastomers and chlorinated elastomers depending upon whether the finished article will be exposed to oils, water, fuels, acids or bases. One will also consider the temperature range to which the article will be subjected and special requirements such as flame resistance. In addition, consideration will be given to the cure characteristics of the polymer and the ease with which defect-free parts can be produced.

The majority of elastomeric seals manufactured on a commercial scale are crosslinked at high temperature in molding processes. Generally, elastomeric seals and gaskets thus produced are manually fitted onto an article to be sealed. Alternatively, adhesives are sometimes utilized to attach the cured sealing member to an article. Such attachment techniques are not completely satisfactory in all cases. In particular, manual methods are time consuming and adhesives can affect the physical properties of the seal.

Elastomeric gaskets are often utilized as sealing members for grooved parts, such as rocker covers and air intake manifolds, that are used in automobile engines. Such gaskets must be resistant to the effects of heat and oil. Traditionally, cured, oil-resistant elastomer compositions, such as ethylene alkyl acrylate copolymer rubbers, have been manually introduced into the groove of a metal part. Many automotive components are now formed from high performance thermoplastic materials, rather than from metal. Manual fitting of elastomeric seals onto these components is time-consuming, but curing the seal in place is impractical because either the cure temperature or, in some cases, the post cure temperature, is usually high enough to cause deformation of the thermoplastic. Yet, if the cure temperature is lowered, cure rate is too slow to be practical. Oil or fuel resistant elastomeric compositions that could be readily applied to an article or groove in their uncured state and that are adapted to low temperature curing techniques would therefore be especially useful in manufacture of thermoplastic articles having attached sealing members for automotive or industrial uses.

Low temperature curing processes that are initiated by high energy radiation, such as electron beam or γ-radiation, are known for use with almost any elastomer, including ethylene acrylate copolymer elastomers. For example, electron beam crosslinking of wire and cable insulation compositions, including elastomeric compositions, is disclosed in E. Brandt and A. Berejka, Electron Beam Crosslinking of Wire and Cable Insulation, Rubber World, 49, Nov. 1978. Eldred, in U.S. Patent 3,950,238, discloses the use of electron beam radiation to cure acrylonitrile butadiene polymers and Clarke, in U.S. Patent 4,275,180, discloses the use of electron beam radiation cure of a blend of an ethylene acrylate copolymer rubber and a thermoplastic polymer, e.g. for cable jacketing. Electron beam cures have the disadvantage of requiring quite complex and expensive equipment for generating high energy particles. It would therefore be advantageous to have available a low temperature curing process that did not rely on the use of electron beam radiation. Low temperature UV cures of a variety of polymers, including ethylene acrylate polymers, are disclosed in U.S. Patent 4,863,536. However, the disclosed process involves dissolution of the particular polymer in an acrylate monomer and is not suitable for preparation of general rubber goods, such as gaskets and seals.

In addition to having available an effective low temperature cure process for ethylene acrylate copolymer elastomers, it would also be advantageous to have available similar curing techniques for use with other elastomers as well. As is the case with ethylene acrylate copolymers, typical curing processes for fluoroelastomers are based on high temperature compression molding or transfer molding techniques. Products made using such processes include seals, gaskets, tubing, and other general rubber goods. In addition, textile composites coated with fluoroelastomers are available commercially and are generally subjected to a baking process during fabrication, for example as disclosed in U.S. Patent 4,770,927 to Effenberger et al.

Low temperature radiation curing processes for fluoroelastomers are known in the prior art. For example, a stain-resistant protective fluoroelastomer coating composition for flooring that is curable using UV radiation is disclosed in European Patent Application 570254. UV cure of epoxy-containing fluorinated copolymers is described in Japanese Kokai Patent Application 5-302058. In addition, UV or electron beam cures of certain fluoroelastomer compositions that are normally cured with a polyol or polyamine crosslinking agent are disclosed in German Patent 19642029 and in Japanese Kokai Patent Application 61-031411. Blends of fluoroplastics and ethylene vinyl acetate copolymers or ethylene acrylic acid ester copolymers that are cured with UV radiation are disclosed in Japanese Kokai Patent Application 5-078539.

These prior art compositions possess interesting properties, but they do not provide compositions that exhibit the tensile strength, modulus, and compression set that is required in many commercial applications, for example air intake manifold gaskets. There thus remains a need in the art for fluoroelastomer compositions that can be cured at low temperature by low energy radiation processes and that, when cured, exhibit excellent tensile strength, modulus, and compression set.

Similarly, chlorinated elastomers such as chlorinated polyethylene, chlorosulfonated polyethylene and epichlorohydrin rubber, are traditionally crosslinked thermally by either ionic or free radical cure systems in compression molds. Extended high temperatures exposure of curable compositions containing these polymers can be problematic due to the tendency of these polymers to dehydrochlorinate. Because of the high cure temperatures required, these elastomers have little utility in applications involving formation of elastomer/thermoplastic composites that are cured in place. Just as with ethylene alkyl acrylate elastomers, manufacture of chlorinated elastomer/thermoplastic composite articles requires an elastomer that can be cured at a temperature sufficiently low to preclude deformation of the thermoplastic. Low temperature UV cures of chlorinated polyolefin coating compositions are known. U.S. 4,880,849 discloses a UV-curable chlorinated polyolefin coating having excellent adhesion to plastic substrates. Japanese Kokai Patent Application 63-26751517 discloses UV cure of chlorosulfonated polyethylene rubber and epichlorohydrin hose that is first passed through a UV irradiation apparatus and then vulcanized at elevated temperature for 30-60 minutes. However, chlorinated elastomer compositions that could be readily applied to a groove or an article in their uncured state and that are adapted to low temperature curing techniques are not known in the prior art.

There is thus a need for a method by which an elastomeric sealing composition may be applied to a substrate in an efficient, adhesive-free manner and cured at low temperature to produce a cured seal that has an excellent balance of tensile strength, modulus and compression set.

### SUMMARY OF THE INVENTION

The present invention is directed to a process for applying a seal to an article as disclosed in claim 1.

The invention is also directed to a process for the manufacture of a gasket in situ as disclosed in claim 3.

### DETAILED DESCRIPTION OF THE INVENTION

The thermally stable, curable compositions comprise an elastomer; a multifunctional crosslinking agent, generally an acrylic or methacrylic crosslinking agent; and a UV initiator. These curable compositions are utilized as starting materials in the process for applying a seal to an article that is an embodiment of the invention. In preferred embodiments of the process of the invention, the elastomer, multifunctional crosslinking agent and UV initiator are present as three separate components. However, the UV initiator may be present as a chemically combined component with the elastomer. That is, the UV initiator may be chemically incorporated into the elastomeric component as a polymer-bound photoinitiator. Such polymer-bound photoinitiators are disclosed, for example in U.S. Patent 5,128,386 wherein a photoinitiator is described that is copolymerized with an acrylate copolymer.

The compositions are curable by the action of UV radiation. They are thermally stable at temperatures used to process uncured elastomer formulations, e.g. in mixing or extruding operations. Such temperatures generally range from 25°C to 250°C. By thermally stable is meant that the compositions do not spontaneously form a crosslinked network, i.e. they do not prematurely cure or scorch. That is, the viscosity of the compositions remains constant, within ± 50% of the initial value when heated to the processing temperature, as indicated by lack of a substantial increase in torque (i.e. an increase of less than 1 dNm) when subjected to the processing temperature for 30 minutes in a Moving Die Rheometer. The appropriate processing temperature will depend on the decomposition temperature of the particular UV initiator and multifunctional crosslinking agent that is employed. However, the processing temperature must be sufficiently high so that the curable elastomer composition flows to the degree required for the production process. This temperature will generally be from 25°C to 250°C, preferably from 90°C to 170°C. The compositions, when heated or subjected to mechanical working, such as in a screw extruder, gear pump, or piston pump, are capable of viscoelastic flow and may be metered and formed into shaped articles, such as seals. These articles may then be cured by exposure to UV radiation.

In addition to an elastomeric component, the curable compositions also include at least one multifunctional crosslinking agent. The multifunctional crosslinking agent is an acrylic or methacrylic crosslinking agent. By multifunctional acrylic or methacrylic crosslinking agent is meant an ester that is a reaction product of a polyhydroxylic compound, generally a polyhydroxylic alcohol, and acrylic acid or methacrylic acid, wherein the crosslinking agent has at least two carbon-carbon double bonds. Such compositions are commonly referred to in the art as multifunctional acrylates or multifunctional methacrylates. Typical multifunctional acrylates and methacrylates have molecular weights of 150 to 1,000 and contain at least two polymerizable unsaturated groups per molecule.

Representative multifunctional acrylic crosslinking agents include acrylates and methacrylates such as ethylene glycol diacrylate; ethylene glycol dimethacrylate; 1,6-hexanediol diacrylate; 1,6-hexanediol dimethacrylate; 1,4-butanediol diacrylate; pentaerythritol triacrylate; pentaerythritol tetraacrylate; dipentaerythritol pentaacrylate, methoxy-1,6-hexanediolpentaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butyleneoxide glycol diacrylates; and bisphenol A alkylene oxide adduct diacrylates. Trimethylolpropane triacrylate and trimethylolpropane trimethacrylate are preferred crosslinking agents because these compounds are readily available. In addition, compression set and crosslink density are enhanced in compositions containing these crosslinking agents compared to compositions containing difunctional acrylates, such as diethylene glycol dimethacrylate.

The multifunctional acrylic and methacrylic crosslinking agents are capable of homopolymerization when irradiated. Thus, when the curable compositions of the invention that contain multifunctional acrylates or methacrylates are exposed to UV radiation, two reactions occur simultaneously. The multifunctional crosslinking agent reacts with the elastomeric polymer component to form interchain and intrachain crosslinks, resulting in a rubber matrix. In addition, excess multifunctional crosslinking agent will homopolymerize and form an interpenetrating network which acts to reinforce the rubber matrix, much in the same manner as fillers reinforce elastomers. It is therefore possible to control the hardness of the final cured product by adjusting the proportion of multifunctional crosslinker present in the curable composition. In general, difunctional acrylates and methacrylates are less efficient crosslinking agents compared to their analogues having higher functionalities. Consequently, crosslinking agents of the class having higher functionalities are preferred for purposes of the present invention.

Elastomeric materials compounded and cured according to methods commonly used in rubber processing technology generally contain carbon black or mineral fillers as reinforcing agents. Reinforcement is reflected in properties such as hardness, modulus, and tensile strength. Generally, reinforced elastomers are characterized by non-linear stress/strain dependence. In contrast, non-reinforced elastomer compositions are characterized by an initial stress build-up at low deformation which does not substantially increase at higher deformation. Further, non-reinforced elastomer compositions tend to break at relatively low ultimate tensile strength.

Use of fillers in UV-initiated reactions would normally be expected to interfere with the UV curing process. However, the present process permits curing of translucent compositions. Thus, the compositions may contain a limited amount of fillers, generally no more than 15 parts by weight per 100 parts polymer. Reinforcement is effected simultaneously with crosslinking by formation of an interpenetrating network. The resultant product exhibits stress/strain behavior that is more linear than that of traditional elastomers which contain fillers which are not chemically bound to the elastomer matrix.

The amount of multifunctional crosslinking agent present in the compositions will depend on the particular elastomer used. Generally, the amount ranges from 0.5 to 25 weight percent, based on the combined weight of polymer, multifunctional crosslinking agent, and UV initiator.

The third component of the curable compositions is a UV initiator. It may be selected from those organic chemical compounds conventionally employed to promote UV-initiated formation of radicals either by intramolecular homolytic bond cleavage or by intermolecular hydrogen abstraction. Such agents include organic compounds having aryl carbonyl or tertiary amino groups. Among the compounds suitable for use are benzophenone; acetophenone; benzil; benzaldehyde; o-chlorobenzaldehyde; xanthone; thioxanthone; 9,10-anthraquinone; 1-hydroxycyclohexyl phenyl ketone; 2,2-diethoxyacetophenone; dimethoxyphenylacetophenone; methyl diethanolamine; dimethylaminobenzoate; 2-hydroxy-2-methyl-1-phenylpropane-1-one; 2,2-di-sec-butoxyacetophenone; 2,2-dimethoxy-1,2-diphenylethan-1-one; benzil dimethoxyketal; benzoin methyl ether; and phenyl glyoxal. Upon exposure to UV radiation, a variety of photochemical transformations may occur, for example, the UV initiator may form free radical reactive fragments that react with the acrylate end groups of the multifunctional acrylic or methacrylic crosslinking agent. This initiates crosslinking of the polymer as well as homopolymerization of the acrylic or methacrylic crosslinking agent. A preferred UV initiator is 1-hydroxycyclohexyl phenyl ketone because of the rapidity with which it generates free radicals when exposed to UV radiation. Mixtures of UV initiators may also be used. This is often desirable because it provides more efficient production of radicals in certain cases. In general, the UV initiator will be present in an amount of 0.1 to 10.0 weight percent, based on the total weight of polymer, multifunctional crosslinking agent, and UV initiator. However, it is preferable to use between 0.5-2.5 weight percent UV initiator, most preferably 0.5-1.0 weight percent UV initiator, based on total weight of polymer, crosslinking agent and UV initiator, because high levels of photoinitiator tend to interfere with penetration and do not substantially contribute to the overall crosslink density. Within the ranges disclosed herein, there is an optimum level of photoinitiator for each particular combination of uncured gum elastomer and crosslinking agent. These optimum levels can be readily determined by one skilled in the art. For example, hydrogenated nitrile rubber will generally require a higher level of photoinitiator than a copolymer of ethylene, methyl acrylate, and ethyl hydrogen maleate. Higher levels of photoinitiator increase the crosslink density at the surface of the cured composition. Low levels of photoinitiators can result in better (i.e. lower) compression sets of samples that are several millimeters thick.

In addition, for purposes of the present invention, the processing temperature must not exceed the temperature at which thermal degradation of the UV initiator occurs. In some cases such degradation would result in scorchy compositions due to formation of free radicals. This is so because thermally-induced fragmentation of the initiator within the processing equipment results in premature-crosslinking of the elastomer. In other instances, slow curing compositions would result due to inactivation of the initiator. Degradation temperatures will differ for each particular UV initiator. Depending upon the type of rubber and the amount of additives, the processing temperature will range from between 25° and 250°C. It is an object of the ' invention to provide stable elastomeric compositions which can be applied to a substrate at temperatures of up to 250°C. A further practical limitation on the processing temperature is that the temperature must not exceed the softening point of the substrate to which it is applied.

The elastomeric component, multifunctional crosslinking agent component, and UV initiator component are present in the compositions in specific relative ratios.

Various additives, commonly used in rubber compounding, may be incorporated into the compositions to modify, stabilize, and reinforce them. Preferably, such additives will be used in amounts which do not interfere substantially with the crosslinking reaction of the uncured polymeric component. For example, if large amounts of fillers that are opaque to UV light are utilized, the filled compositions will not cure evenly throughout, or only the surface of the composition will be cured. Usually, fillers may be employed in amounts of up to about 15 parts per hundred parts of elastomer. Typical examples include non-black fillers such as minerals or glass fibers. Polymeric fillers of high reinforcing efficiency, such as polytetrafluoroethylene and aramid fibers, may also be used, generally at low levels. It is preferable that the presence of additives does not raise the viscosity of the curable composition used in the process of the invention to more than ML 1+4 (100°C) of 150 or lower it to less than ML 1+4 (100°C) of 1. Compositions outside this range are not suitable for the gasketing-in-place process of the invention.

Small amounts of inhibitors may also be present in the compositions as a result of the presence of these additives in commercial samples of acrylic or methacrylic crosslinking agents. The inhibitors are generally present in low amounts, for example below 1500 ppm (parts per million, based on the weight of the crosslinking agent). They act to prevent thermally induced polymerization of the crosslinking agents during storage and shipment.

The compositions are particularly suited for manufacture of elastomeric seals and gaskets in situ using a technique we refer to herein as gasketing-in-place. According to this technique, a curable elastomeric composition is heated to a temperature of 25°-250°C; preferably 90°C-170°C. The heated composition is then metered onto a substrate to form an uncured seal of a desired thickness which is then cured. Thus, the seal is formed in place directly on the object to be sealed, rather than in a separate molding step. Typically, uncured seals are formed in thicknesses of 1-15 mm, preferably in thicknesses of 2-8 mm.

Robotized hot melt equipment may be used to apply gaskets in place. In one embodiment of the process of the present invention, a curable composition comprising a low viscosity elastomer component, multifunctional crosslinking agent, and UV initiator, is introduced to a drum having a heated platen and piston. The composition, when heated, becomes soft and extrudable. It is forced out of the drum by the action of the piston, generally at relatively low pressures, typically less than 5.0 bars (i.e. 0.5 MPa). The composition is then fed by gear or piston pumping through heated tubing to an application gun fitted to a multidimensional industrial robot capable of precise and rapid metering. In this way, the composition can be introduced into a groove of a part such as a thermoplastic article that has just been produced, for example by molding. The bead of uncured elastomer in the groove solidifies rapidly as it cools and forms an uncured sealing element. The groove can be in a part made from other materials as well, including but not limited to metal Alternatively, the composition can be deposited onto the exterior of an object to form a seal. This hot melt application method is preferred for low viscosity elastomers, generally of Mooney viscosity 1-20 ML 1+4 (100°C). The method permits extrusion from a drum using relatively low pressures. Continuous feeding and metering pumps are capable of handling compositions of the invention having viscosities up to 1000 Pa.s. Hot melt equipment may be used for compositions having somewhat higher viscosities, for example ML 1+4 (100°C) of 70, by employing an extruder to introduce the composition into the heated tubing. The viscosity thereupon decreases, permitting formation of seals from the higher viscosity compositions.

In another embodiment of the process of the invention, relatively high viscosity compositions or compositions of relatively low heat resistance may be formed into uncured seals by the gasketing-in-place technique. Instead of using hot melt equipment, screw extruders are exclusively utilized to deliver the elastomeric composition to the article to be sealed. An extruder that is used in combination with a flexible arm to apply a bead of uncured elastomer to a groove is particularly preferred for such gasketing-in-place processes. This differs from conventional extruder technology in that the extruder is not utilized to form the finished part. Instead, it pumps the uncured elastomer composition to a robotized application head that meters the composition and deposits it at the location to be sealed. Use of screw extruders results in relatively high energy input to the polymer compared with processes that utilize hot melt equipment. In order to minimize elastomer degradation in the extruder, the extrusion process must not cause the temperature of the compound to rise above 250°C. This generally requires slow extrusion speeds. Consequently, extrusion processes are generally slower methods of manufacture. Further, such equipment requires high investment costs. Those skilled in the art will recognize that the appropriate temperature for extrusion will be dependent on the viscosity of the uncured elastomer, the molecular weight of the uncured elastomer, the level of crosslinking agent, the decomposition temperature of the photoinitiator and the volatilization temperature of the crosslinking agent and will select a value within the range of 25°-250°C that is optimum for the particular circumstances.

The gasketing process of the present invention may be employed for manufacture of seals and gaskets using the UV curable elastomer compositions. Ethylene alpha-olefin elastomers, such as elastomeric copolymers and interpolymers of ethylene with one or more comonomers selected from propylene, 1-butene, 1-hexene, 1-octene, 4-methyl-1-penetene, and other C₃-C₂₀ alpha-olefins, are suitable elastomeric components in the UV curable composition. Elastomeric copolymers of ethylene, a C₃-C₈ olefin, and a diene may also be used in the process of the invention. These copolymers can be terpolymers, tetrapolymers or higher order copolymer elastomers of the ethylene/C₃-C₈ alpha olefin/diene type. These elastomers are copolymers of ethylene, a C₃-C₈ alpha-olefin and at least one non-conjugated diene. They may, in addition, contain a minor amount, generally up to 10 weight percent, of at least one other diene or triene having copolymerizable double bonds. Preferred C₃-C₈ alpha-olefins are propylene and butene. The non-conjugated dienes of the first type include 1,4-hexadiene; 2-methyl-1,5-hexadiene; vinyl norbornene; 8-methyl-4-ethylidene-1,7-octadiene; 1,9-octadecadiene; dicyclopentadiene; tricyclopentadiene; 5-ethylidene-2-norbornene; or 5-methylene-2-norbomene. Preferred dienes having one reactive double bond are 1,4-hexadiene, dicyclopentadiene and ethylidene norbornene. The non-conjugated dienes of the second type include norbornadiene; 1,4-pentadiene; 1,5-hexadiene; 1,7-octadiene; 1,2-heneicosadiene; or 5-(5-hexenyl)-2-norbornene, preferably norbornadiene. These polymers are generally produced by polymerization in the presence of Ziegler-Natta catalysts or by polymerization in the presence of metallocene catalysts. Preparative techniques for ethylene alpha-olefin elastomers prepared in the presence of metallocene catalysts may be found in U.S. Patents 5,278,272 and 5,272,236. Typical ethylene alpha-olefin copolymers and EPDM elastomers are commercially available as Engage^{®} polyolefin elastomers and Nordel®hydrocarbon rubbers from DuPont Dow Elastomers L.L.C. The proportion of elastomer, multifunctional crosslinking agent, and UV initiator will be in the weight ratio of 80-98:1-19.5:0.2-5.0, respectively, when the elastomer is an ethylene alpha-olefin elastomer or an EPDM elastomer.

In order to optimize the elastomeric properties of seals made by the above-described processes, they must be crosslinked, i.e. cured. It would be impractical to utilize a heat-activated cure system to accomplish a rapid crosslinking reaction in such processes. One would risk converting the curable composition used to form the seals to an intractable, crosslinked material during the metering step. Specifically, as the curable composition was heated or subjected to temperature elevation caused by mechanical working, the crosslinking reaction would be triggered. It would be difficult to control premature gelling (i.e. scorch) during metering. Because crosslinked compositions do not flow readily, processes which result in scorchy products are undesirable. Consequently, heterolytic cure systems, which rely on thermally-induced crosslinking reactions, are not appropriate for the present process. In addition, the most common homolytic, i.e. free radical, curing processes, which depend on thermal decomposition of peroxides, are also unsuitable for use in the present process. It has, however, been found that curable compositions using the process of the invention can be effectively cured by UV induced free radical processes.

UV cure of elastomeric compositions using the process of the invention may be accomplished at room temperature or at higher temperatures. For example, in certain circumstances wherein the elastomeric composition is to be used as a sealant. it may be desirable to perform a photocure immediately after application of the uncured composition to the object to be sealed. At that point, the temperature of the composition may be as high as 250°C. However, heating the curable composition is neither necessary nor particularly desirable for an effective photocure. In addition, when the compositions are used to form seals by the gasketing in place technique on thermoplastic articles, low temperature cure minimizes any possibility of degradation or thermal distortion of the thermoplastic. Further, it is not necessary to perform the UV irradiation in an inert atmosphere. The cure reaction can be conducted under atmospheric conditions with no deleterious effects. In addition, it has also been found that in some cases curing the composition under water is preferable to minimize heat buildup.

For purposes of the process of this invention, the wavelength spectrum of radiation used to effect the curing reaction typically corresponds to the absorption maximum of the UV initiator. This typically ranges from about 200-400 nanometers. Suitable UV radiation sources include medium pressure mercury vapor lamps, electrodeless lamps, pulsed xenon lamps, and hybrid xenon/mercury vapor lamps. A preferred arrangement comprises one or more lamps together with a reflector, which diffuses the radiation evenly over the surface to be irradiated. The radiation dosage must be sufficient to cure the polymeric composition, i.e. to produce a cured composition having a compression set of 90 or lower, preferably 50 or lower, and an elongation at break of at least 100%. A dosage of at least about 10 joules per square centimeter, and preferably 20 joules is usually sufficient for optimum cure. Dosage is a function of the time of exposure to the UV radiation, the distance from the UV radiation source and the power level of the radiation source. The required radiation dose can be readily determined by curing small samples of the curable composition and measuring physical properties, such as tensile strength, compression set and elongation, after cure. In most instances, an acceptable degree of cure can be obtained by exposures of 30-300 seconds using a lamp of about 80 W/cm. Appropriate adjustments may be made depending on the power of the lamp, distribution of the output over the UV range, the thickness of the sample as well as the polymeric component, level of crosslinking agent present, and level of filler present. For example, ethylene acrylate copolymer rubber containing filler would require a longer cure time than the same composition without filler.

Foaming agents may be incorporated into the curable compositions of the present invention. In such circumstances a cellular structure will be formed by exposure of the curable composition to UV radiation as a result of thermal decomposition of the foaming agent induced by simultaneous heating that occurs during exposure to UV light. This heating phenomenon may be augmented and controlled by additional external application of heat. Typical foaming agents that may be employed include p,p'-oxybisbenzenesulfonyl hydrazide, azodicarbon-amides, p-toluenesulfonyl semicarbazides, and dinitrosopentamethylene tetramine. Alternatively, the UV curing reaction may also be accomplished with cooling, so that curing and foaming occur sequentially, rather than simultaneously. That is, the curable composition is exposed to UV radiation with cooling, and the cured composition is then passed through a hot air tunnel to cause foaming. Closed cell structures of low specific gravity may be prepared by such processes. For example, structures with specific gravities of 0.25-6.0 g/cm³ may be obtained

The curable elastomeric compositions are used in preparation of seals and gaskets for thermoplastic articles, particularly those employed in automotive applications.

## Claims

1. A process for applying a seal to an article comprising the steps of
A) heating to a temperature of from 25°C to 250°C a thermally stable, curable, extrudable elastomer composition comprising
1) 80-98 weight percent of an ethylene alpha-olefin copolymer comprising ethylene and a C₃-C₂₀ alpha-olefin;
2) 1-19.5 weight percent of a multifunctional crosslinking agent selected from the group consisting of multifunctional acrylic crosslinking agents and multifunctional methacrylic crosslinking agents; and
3) 0.2-5 weight percent of a UV initiator
wherein the weight percentages of each of components 1), 2) and 3) are based on the combined weights of components 1), 2) and 3) to form a thermally stable, curable, extrudable mixture having a Mooney viscosity of 1-150, ML 1+4 (100°C); and depositing the elastomer composition onto said article in the shape and thickness desired to form an uncured seal composition; and
B) irradiating said uncured seal composition with UV radiation for a time sufficient to cure said uncured seal composition.

2. The process of claim 1, wherein the components (1) to (3) are blended together at a temperature of from 25°C to 250°C to provide the elastomer composition.

3. A process for the manufacture of a gasket in situ comprising the steps of
A) heating to a temperature of from 25°C to 250°C a thermally stable, curable, extrudable elastomer composition comprising
1) 80-98 weight percent of an ethylene alpha-olefin copolymer comprising ethylene and a C₃-C₂₀ alpha-olefin;
2) 1-19.5 weight percent of a multifunctional crosslinking agent selected from the group consisting of multifunctional acrylic crosslinking agents and multifunctional methacrylic crosslinking agents; and
3) 0.2-5 weight percent of a UV initiator
wherein the weight percentages of each of components 1), 2) and 3) are based on the combined weights of components 1), 2) and 3) to form a thermally stable, curable, extrudable mixture having a Mooney viscosity of 1-150, ML 1+4 (100°C); and depositing the elastomer composition onto an article to form an uncured gasket composition; and
B) irradiating said uncured gasket composition with UV radiation for a time sufficient to cure said uncured gasket composition.

4. The process of claim 1, 2 or 3 wherein the ethylene alpha-olefin copolymer is an elastomeric copolymer of ethylene, a C₃-C₈ alpha-olefin and at least one non-conjugated diene.

5. The process of any preceding claim wherein the curable composition is heated to a temperature of 90-170°C in step A).

6. The process of any preceding claim wherein the article is made of a thermoplastic material.

7. The process of any preceding claim wherein the multifunctional crosslinking agent is a multifunctional acrylate.

8. The process of any one of claims 1 to 6 wherein the multifunctional crosslinking agent is a multifunctional methacrylate.

9. The process of any one of claims 1 to 3 and 7 to 8 wherein the article comprises a metal.

10. The process of claim 3, wherein a screw extruder is used to deliver the elastomeric composition to the article to be scaled.

11. A cured article produced by the process of any preceding claim,

## Patentansprüche

1. Verfahren zum Aufbringen einer Dichtung auf einen Gegenstand, umfassend die Schritte
A) das Erwärmen einer thermisch stabilen, härtbaren, extrudierbaren Elastomerzusammensetzung auf eine Temperatur von 25°C bis 250°C, umfassend
1) 80-98 Gew.-% eines Ethylen-Alpha-Olefln-Copolymers, umfassend Ethylen und ein C₃-C₂₀ Alpha-Olefin,
2) 1-19,5 Gew.-% eines multifunktionalen Vernetzungsmittels, ausgewählt aus der Gruppe, bestehend aus multifunktionalen acrylischen Vernetzungsmitteln und multifunktionalen methacrylischen Vernetzungsmitteln, und
3) 0,2-5 Gew.-% eines UV-Initiators,
wobei die Gewichtsprozentanteile von jeder der Komponenten 1), 2) und 3) auf die kombinierten Gewichte der Komponenten 1), 2) und 3) bezogen sind, unter Bildung eines thermisch stabilen, härtbaren, extrudierbaren Gemisches mit einer Mooney-Viskosität von 1-150, ML 1+4 (100°C), und das Abscheiden der Elastonierzusammensetzung auf den Gegenstand in der Form und Dicke, die gewünscht ist, unter Bildung einer ungehärteten Dichtungszusammensetzung, und
B) das Bestrahlen der ungehärteten Dichtungszusammensetzung mit UV-Slrahlung für eine Zeit, die ausreichend ist, um die ungehärtete Dichtungszusammensetzung zu härten.

2. Verfahren gemäß Anspruch 1, wobei die Komponenten (1) bis (3) miteinander bei einer Temperatur von 25°C bis 250°C unter Bereitstellung der Elastomerzusammensetzung gemischt werden.

3. Verfahren zur Herstellung eines Dichtungsrings in situ, umfassend die Schritte:
A) das Erwärmen einer thermisch stabilen, härtbaren, extrudierbaren Elastomerzusammensetzung auf eine Temperatur von 25°C bis 250°C, umfassend
1) 80-98 Gew.-% eines Ethylen-Alpha-Olefin-Copolymers, umfassend Ethylen und ein C₃-C₂₀ Alpha-Olefin,
2) 1-19,5 Gew.-% eines multifunktionalen Vernetzungsmittels, ausgewählt aus der Gruppe, bestehend aus multifunktionalen acrylischen Vernetzungsmitteln und multifunktionalen methacrylischen Vernetzungsmitteln, und
3) 0,2-5 Gew.-% eines UV-Initiators,
wobei die Gewichtsprozentanteile von jeder der Komponenten 1), 2) und 3) auf die kombinierten Gewichte der Komponenten 1), 2) und 3) bezogen sind, unter Bildung eines thermisch stabilen, härtbaren, extrudierbaren Gemisches mit einer Mooney-Viskosität von 1-150, ML 1+4 (100°C), und das Abscheiden der Elastomerzusammensetzung auf elnen Gegenstand unter Bildung einer ungehärteten Dichtungsringzusammensetzung, und
B) das Bestrahlen der ungehärteten Dichtungsringzusammensetzung mit UV-Strahlung für eine Zeit, die ausreichend ist, um die ungehärtete Dichtungsringzusammensetzung zu härten.

4. Verfahren gemäß Anspruch 1, 2 oder 3, wobei das Ethylen-Alpha-Olefin-Copolymer ein elastomeres Copolymer von Ethylen, einem C₃-C₈ Alpha-Olefin und mindestens einem nicht-konjugierten Dien ist.

5. Verfahren gemäß einem vorhergehenden Anspruch, wobei die härtbare Zusammensetzung in Schritt A) auf eine Temperatur von 90 - 170°C erwärmt wird.

6. Verfahren gemäß einem vorhergehenden Anspruch, wobei der Gegenstand aus einem thermoplastischen Material ist.

7. Verfahren gemäß einem vorhergehenden Anspruch, wobei das multifunktionalo Vernetzungsmittel ein multifunktianales Acrylat ist.

8. Verfahren gemäß einem der Ansprüche 1 bis 6, wobei das multifunktionale Vernetzungsmittel ein multifunktionales Methacrylat ist.

9. Verfahren gemäß einem der Ansprüche 1 bis 3 und 7 bis 8, wobei der Gegenstand ein Metall umfaßt.

10. Verfahren gemäß Anspruch 3, wobei ein Schneckenextruder verwendet wird, um die elastomere Zusammensetzung zu dem zu dichtenden Gegenstand zu befördern.

11. Gehärteter Gegenstand, erzeugt durch das Verfahren gemäß einem vorhergehenden Anspruch.

## Revendications

1. Procédé pour appliquer un joint à un article comprenant les étapes de :
A) chauffage à une température de 25 à 250°C d'une composition élastomère thermiquement stable, durcissable, extrudable comprenant :
1) 80 à 98 % en poids d'un copolymère d'éthylène/alpha-oléfine comprenant de l'éthylène et une alpha oléfine en C₃-C₂₀ ;
2) 1 à 19,5 % en poids d'un agent de réticulation multifonctionnel choisi dans le groupe constitué par les agents de réticulation acryliques multi fonctionnels et les agents de réticulation méthacryliques multi-fonctionnels ; est
3) 0,2 à 5 % en poids d'un initiateur UV
dans lequel les pourcentages en poids de chacun des composante 1) , 2) et 3) sont basés sur les poids combines des composants 1), 2) et 3) de manière à former un mélange thermiquement stable, durcissable, extrudable ayant une viscosité Mooncy de 1 à 1.50, ML 1+4 (100°C); et déposer la composition élastomère sur ledit article sous la forme et à l'épaisseur souhaitées pour former une composition de joint non durcie ; et
B) irradiation de ladite composition de joint non durcie avec un rayonnement UV pendant un temps suffisant pour durcir ladite composition de joint non durcie.

2. Procédé selon la revendication 1, dans lequel les composants (1) à (3) sont mélangés ensemble à une température de 25 à 250°C pour former la composition élastomère.

3. Procédé de fabrication d'un joint in situ comprenant les étapes de :
A) chauffage à une température de 25 à 250°C une composition élastomère thermiquement stable, durcissable, extrudable comprenant :
1) 80 à 98 % en poids d'un copolymère d'éthylène/alpha oléfine comprenant de l'éthylène et une alpha oléfine en C₃-C₂₀ ;
2) 1 à 19,5 % en poids d'un agent de réticulation multifonctionnel choisi dans le groupe constitué par les agents de réticulation acryliques multi-fonctionnels et les agents de réticulation méthacryliques multi-fonctionnels ; et
3) 0,2 à 5 % en poids d'un initiateur UV
dans lequel les pourcentages en poids de chacun des composants 1), 2) et 3) sont basés sur les poids combinés des composants 1), 2) et 3) de manière à former un mélange thermiquement stable, durcissable, extrudable ayant une viscosité Mooney de 1 à 150, ML 1+4 (100°C); et déposer la composition élastomère sur un article pour former une composition de joint non durcie ; et
B) irradiation de ladite composition de joint non durcie avec un rayonnement UV pendant un temps suffisant pour durcir ladite composition de joint non durcie.

4. Procédé selon les revendications 1, 2 ou 3, dans lequel le copolymère d'éthylène/alpha-oléfine est un copolymère élastomère à base d'éthylène, d'une alpha-oléfine en C₃-C₈ et d'au moins un diène non-conjugué.

5. Procédé selon l'une quelconque des revendications précédentes, dans lequel la composition durcissable est chauffée à une température de 90-170°C dans l'étape A).

6. Procédé selon l'une quelconque des revendications précédentes, dans lequel l'article est à base d'un matériau thermoplastique.

7. Procédé selon l'une quelconque des revendications précédentes, dans lequel l'agent de réticulation multifonctionnel est un acrylate multifonctionnel.

8. Procédé selon l'une quelconque des revendications 1 à 6, dans lequel l'agent de réticulation multifonctionnel est un méthacrylate multifonctionnel.

9. Procédé selon l'une quelconque des revendications 1 à 3, dans lequel l'article comprend un métal.

10. Procédé selon la revendication 3, dans lequel une extrudeuse à vis est utilisée pour délivrer la composition élastomère à à l'article auquel doit être appliqué un joint.

11. Article durci fabriqué par le procédé selon l'une quelconque des revendications précédentes.
